# EUROPÄISCHE PATENTSCHRIFT

(11) **EP 3 075 507 B1**
(45) Veröffentlichungstag und Bekanntmachung des Hinweises auf die Patenterteilung: **24.01.2018**
(21) Anmeldenummer: 16161981.2
(22) Anmeldetag: 23.03.2016
(51) Int. Cl.: B28C 7/04, B28C 9/04, B28C 5/42, B60P 3/16

(54) **TRANSPORTFAHRZEUG**
TRANSPORT VEHICLE
VÉHICULE DE TRANSPORT

(30) Priorität: 30.03.2015 DE 102015104849
(43) Veröffentlichungstag der Anmeldung: 05.10.2016
(73) Patentinhaber: Rombold & Gfröhrer GmbH & Co. KG, 71254 Ditzingen (DE)
(72) Erfinder: Rombold, Albrecht, 70736 Fellbach-Oeffingen (DE)
(74) Vertreter: Glück Kritzenberger Patentanwälte PartGmbB

(56) Entgegenhaltungen:
- EP-A1- 1 773 551
- EP-A2- 2 239 120
- WO-A1-2004/078438
- WO-A2-2004/091878
- DE-A1- 19 808 306
- JP-B2- 3 203 741

## Beschreibung

### Technisches Gebiet

Die vorliegende Erfindung betrifft ein Transportfahrzeug, wie es insbesondere zur Anlieferung von Spritzbeton an einer Baustelle, zum Beispiel an einem Tunnel, verwendet wird. Das Transportfahrzeug hat eine drehbar gelagerte Mischtrommel für trockenes zementhaltiges Material, in der Regel eine Trockenbetonmischung. Hiermit ist gemeint, dass das zementhaltige Material einen derartigen Trockenheitsgrad von vorzugsweise weniger als 5%, insbesondere weniger als 1 % aufweist, womit es an der Baustelle mit Wasser gemischt werden muss, um zu einer spritzfähigen oder verarbeitungsfähigen Betonmasse zu führen. Weiterhin enthält das Transportfahrzeug einen Wasserbehälter, um vor Ort, das heißt an der Baustelle, das trockene zementhaltige Material mit dem Wasser aus dem Wasserbehälter zu mischen. Der Vorteil dieses Verfahrens liegt darin, dass das trockene zementhaltige Material in der Mischtrommel nicht aushärtet, sobald das Transportfahrzeug eine gewisse Zeit steht. Auf diese Weise kann das in der Mischtrommel befindliche Material noch Tage später verspritzt werden. Das trockene zementhaltige Material kann jedoch auch einen höheren Wassergehalt aufweisen, der jedoch eine nachträgliche Mischung des Materials mit Wasser zum Erhalten eines verarbeitungsfertigen Betons bzw. Spritzbetons erfordert.

Weiterhin hat das Transportfahrzeug eine dem Ausgang der Mischtrommel nachgeordnete Mischvorrichtung zum Mischen des trockenen zementhaltigen Materials aus der Mischtrommel mit Wasser aus dem Wasserbehälter. Die Mischvorrichtung ist über einen Wasserzufuhranschluss mit dem Wasserbehälter verbunden. Weiterhin enthält das erfindungsgemäße Transportfahrzeug eine Wassermengenerfassungseinrichtung zum Erfassen der vom Wasserbehälter zur Mischvorrichtung zugeführten Wassermenge. Die Wassermengenerfassungseinrichtung hat einen mit dem Messeingang einer Steuereinrichtung verbundenen ersten Signalausgang. Die Wassermengenerfassungseinrichtung kann zum Beispiel basieren auf der Wiegung des Wasserbehälters oder durch Vorsehen eines elektrischen Wasserdurchflußmessers in der Verbindung zwischen dem Wasserbehälter und dem Wasserzufuhranschluss der Mischvorrichtung. In dieser Verbindung kann vorzugsweise auch eine Pumpe angeordnet sein, um das Was-Wasser mit einem definierten Wasserdruck in die Mischvorrichtung zu überführen. Prinzipiell kann aber auch der Wasserdruck des mit Bezug zur Mischvorrichtung oben liegenden Wasserbehälters genutzt werden. Das Transportfahrzeug hat weiterhin eine Wägevorrichtung für das Gewicht der Mischtrommel, welche Wägevorrichtung einen mit der Steuereinrichtung verbundenen zweiten Signalausgang hat. Die Steuereinrichtung ist dafür vorgesehen, den Mischvorgang und die Abgabe des Spritzbetons an der Baustelle zu steuern.

Die WO 2004/091878 zeigt ein Transportfahrzeug gemäß dem Oberbegriff der Ansprüche 1 und 12.

### Darstellung der Erfindung

Es ist Aufgabe der Erfindung, ein Transportfahrzeug der oben genannten Art derart weiterzuentwickeln, dass eine reproduzierbare Qualität des angelieferten Spritzbetons erzielt wird. Die Aufgabe wird erfindungsgemäß durch ein Transportfahrzeug mit den Merkmalen des Anspruchs 1 gelöst. Die Aufgabe wird weiterhin durch ein Verfahren gemäß Anspruch 12 gelöst. Vorteilhafte Weiterbildungen der Erfindung sind Gegenstand der zugeordneten abhängigen Ansprüche.

Die Erfindung ist weiterhin in der Beschreibung und in den Zeichnungen beschrieben. Erfindungsgemäß ist die Steuereinrichtung auf dem Transportfahrzeug angeordnet und hat einen Speicher für die Erfassung der Werte der Wassermengenerfassungseinrichtung und der Wägevorrichtung. Weiterhin hat die Steuereinrichtung einen Ausgang und eine Schnittstelle zur Übertragung der erfassten und/oder gespeicherten Daten. Durch die Erfindung ist es somit möglich, bei einer angelieferten Spritzbetoncharge genau zu erfassen, wie viel trockenes zementhaltiges Material abgegeben worden ist, was über den zweiten Signalausgang der Wägevorrichtung erfassbar ist. So wird das Gewicht der Mischtrommel vor und nach der Abgabe der angelieferten Charge erfasst. Aus der Differenz der beiden Werte lässt sich ermitteln, wie viel trockenes zementhaltiges Material aus der Mischtrommel an der Baustelle abgegeben wurde. Zudem wird über den ersten Signalausgang der Wassermengenerfassungseinrichtung erfasst, wie viel Wasser dem trockenen zementhaltigen Material zugesetzt wurde. Aus diesen Werten lässt sich genau bestimmen, welche Materialien zugesetzt wurden und wie viel der einzelnen Materialien zugesetzt wurden. Aus den gespeicherten oder übertragenen Daten lässt sich weiterhin genau der Wasser/Zement-Wert ermitteln. Die Erfindung bietet somit ein ideales Mittel, um die Qualität eines angelieferten Spritzbetons noch vor Ort zu dokumentieren. Durch Verwendung der Steuerung zur Zudosierung der einzelnen Komponenten, lässt sich darüber hinaus optional die Qualität des Beton einstellen, z.B. ein genauer Wasser/Zement-Wert.

Vorzugsweise ist auf dem Transportfahrzeug einen Behälter für wenigstens ein Additiv angeordnet, wobei dann die Zudosierung des Additivs gesteuert durch die Steuereinrichtung mittels einer zugeordneten Zudosierpumpe erfolgt. Die Zugabe kann an beliebigen Orten erfolgen, so z.B. wahlweise in das zuzusetzende Wasser, in die Mischvorrichtung oder in die Spritzdüse für den Spritzbeton. Ein derartiges Additiv kann z.B. ein Beschleuniger sein.

Vorzugsweise hat das erfindungsgemäße Transportfahrzeug eine Ventil/Pumpenanordnung, die eine Steuerung des Wasserdurchflusses zum Wasserzufuhranschluss der Mischvorrichtung erlaubt. Die Ventil/Pumpenanordnung ist durch die Steuereinrichtung steuerbar. Eine derartige Ventil/Pumpeneinrichtung kann zum Beispiel durch eine Parallelschaltung mehrerer Durchlassventile mit unterschiedlichem Durchflusswert gebildet sein, die selektiv durch die Steuereinrichtung angesteuert werden. Andererseits kann die Ventilanordnung auch durch ein einziges steuerbares Ventil gebildet sein, dessen Durchflussmenge durch die Steuereinrichtung steuerbar ist. In einer alternativen Ausführungsform kann die Ventil/Pumpenanordnung durch eine steuerbare Pumpe gebildet sein, deren Förderkapazität sich durch die Steuereinrichtung einstellen lässt. In allen Fällen wird exakt die Menge des der Mischvorrichtung zugeführten Wassers definiert und somit erfasst. Der Förderdruck kann bei reinen Ventilanordnungen durch eine Wasserpumpe bereitgestellt werden oder durch den den Staudruck da der Wasserbehälter vorzugsweise höher liegt als die Mischvorrichtung und die Ventilanordnung.

Die Mischvorrichtung kann durch jegliche an sich bekannte Mischvorrichtung gebildet sein, wie sie zur gebrauchsfähigen Aufbereitung von Spritzbeton bekannt sind. Vorzugsweise wird als Mischvorrichtung eine Mischschnecke verwendet, die im Bereich des Ausgangs der Mischtrommel angeordnet ist und welche über einen Wasserzufuhranschluss verfügt, über welchen dem der Mischschnecke zugeführten trockenen zementhaltigen Material Wasser zugeführt wird, welche dann in der Mischschnecke homogen vermischt werden.

Vorzugsweise weist die Steuereinrichtung eine Eingabevorrichtung auf zur Eingabe eines gewünschten Wasser/Zement-Wertes. Die Ventil/Pumpenanordnung ist dann in Abhängigkeit von dem eingegebenen Wert steuerbar, z.B. durch Selektion eines Ventils mit einem definierten Durchlass. Auf diese Weise lassen sich auf der Baustelle gewünschte Wasser/Zement-Werte einstellen. Die Einstellung des Wasser/Zement-Wertes erfolgt somit automatisch, so dass zum Anliefern des Spritzbetons kein Personal erforderlich ist, welches vertiefte Kenntnisse in der Anmischung von Beton aufweisen muss.

Selbstverständlich können in der Steuereinrichtung auch voreingestellte Wasser/Zement-Werte gespeichert sein, so dass der Anwender nur noch zwischen den voreingestellten Wasser/Zement-Werten auswählen muss, wonach die Steuerung dann die Mischvorrichtung und die Ventil/Pumpenanordnung entsprechend ansteuern.

Die Mischvorrichtung hat einen Antrieb, in der Regel einen Elektromotor oder einen Hydraulikantrieb. Prinzipiell ist es möglich, dass die Steuereinrichtung die Mischvorrichtung nur mit einer einzigen Geschwindigkeit ansteuert, womit die Zufuhrrate des trockenen zementhaltigen Materials fest definiert wäre. Es ist jedoch auch möglich, die Fördergeschwindigkeit der Mischvorrichtung variabel zu gestalten, zum Beispiel durch entsprechende Ansteuerung des Antriebsmotors der Mischvorrichtung. In diesem Fall kalkuliert die Steuereinrichtung die Zufuhrrate an trockenem zementhaltigen Material vorzugsweise über die angesteuerte Geschwindigkeit der Mischvorrichtung. Alternativ kann die Steuereinrichtung die Zufuhrrate des trockenen zementhaltigen Materials auch über die Signale der Wägevorrichtung ermitteln, indem die zeitliche Abnahme des Gewichts der Mischtrommel über die Wägevorrichtung erfasst wird. Selbstverständlich kann eine derartige Steuerung nicht direkt zu Beginn der Anlieferung durchgeführt werden, sondern erst nach einer gewissen Zeit, zum Beispiel nach 10 - 30 s, die man benötigt, um einen verlässlichen Wert für die Zufuhrrate aus den zeitlich versetzten Messsignalen der Wägevorrichtung zu erhalten.

In einer vorteilhaften Weiterbildung der Erfindung hat der Speicher einen Speicherabschnitt für voreingestellte Wasser/Zement-Werte und zugeordnete Steuersignale für die Ventil/Pumpenanordnung und gegebenenfalls für die Mischvorrichtung. Die Steuereinrichtung ist dazu konzipiert, die Ventil/Pumpenanordnung und gegebenenfalls die Mischvorrichtung zumindest während des Beginns einer Anlieferung entsprechend den voreingestellten Werten zu steuern. Auf diese Weise ist die Einstellung eines gewünschten Wasser/Zement-Wertes beim angelieferten Beton zumindest in der Anfangszeit unabhängig von den ermittelten Messsignalen der Wägevorrichtung. Die gesamte Anlieferung kann wahlweise aufgrund der fest voreingestellten Werte erfolgen oder später, zum Beispiel nach 10 s bis 1 min, auf die von der Wägevorrichtung erhaltene Zufuhrrate des abgegebenen trockenen zementhaltigen Materials kalibriert werden. Die zugegebene Wassermenge kann über die Ventil/Pumpenanordnung dann exakt auf die von der Wägevorrichtung erfasste Abgabemenge an trockenem zementhaltigen Material entsprechend dem gewünschten Wasser/Zement-Wert kalibriert werden. Auf diese Weise lässt sich ein gewünschter Wasser/Zement-Wert sehr exakt einstellen.

Vorzugsweise enthält die Steuereinrichtung eine interne Uhr. Die Steuereinrichtung ist dann in der Lage, die Signale der Wägevorrichtung und der Wassermengenerfassungseinrichtung mit den zugeordneten Zeitdaten der internen Uhr abzuspeichern, nämlich dem Datum und der Uhrzeit. Auf diese Weise wird zu den Dokumentationszwecken eine genaue Aufstellung der abgegebenen Material- und Wasserwerte als auch die zugeordnete Uhrzeit erhalten. Auf diese Weise ist später ein lückenloser Nachweis über die angelieferte Spritzbetonqualität verfügbar.

Vorzugsweise weist das Transportfahrzeug einen an der Steuereinrichtung angeschlossenen Drucker auf. Auf diese Weise kann vor Ort, das heißt an der Baustelle, ein Quittungsbeleg mit den angelieferten Materialwerten übergeben werden, welcher an der Baustelle zu Qualitätssicherungszwecken benutzt werden kann.

Vorzugsweise ist die Schnittstelle der Steuereinrichtung durch einen USB-Port gebildet, welcher entweder den Anschluss eines Flashspeichers oder eine Datenübertragung zu einem externen Datenverarbeitungsgerät, zum Beispiel einem Laptop, erlaubt. Die Daten über die angelieferte Charge, nämlich die Menge des trockenen zementhaltigen Materials, die Wassermenge und die zugeordneten Zeitdaten können somit entweder auf einen USB-Stick geschrieben und der Baustellenleitung übergeben werden oder auf einen Laptop der Baustellenleitung überspielt werden.

Vorzugsweise ist die Steuereinrichtung mit einem GPS-Ortserkennungssystem ausgerüstet oder verbunden, wobei der Speicher der Steuereinrichtung dazu konzipiert ist, die Daten des GPS-Systems zusammen mit den Materialdaten von der Wägevorrichtung und der Wassermengenerfassungseinrichtung und gegebenenfalls der internen Uhr abzuspeichern. Auf diese Weise wird ein vollständiges Protokoll mit folgenden Daten erhalten: Angelieferte Material- und Wassermengen, Zeit der Anlieferung der Charge, Ort der Anlieferung der Charge.

Vorzugsweise enthält das Transportfahrzeug eine im Auslassbereich der Mischtrommel angeordnete Fördereinrichtung, wie zum Beispiel eine Igelförderwelle, welche dazu beiträgt, dass das von der Mischtrommel an die Mischvorrichtung abgegebene Material kontinuierlich zugeführt wird, d.h. ohne Verstopfungen im Mischtrommelausgang. Auf diese Weise wird eine kontinuierliche Befüllung der Mischvorrichtung durch die Mischtrommel sichergestellt, so dass eine gleichbleibende homogene Qualität des zugeführten Spritzbetons erzielt wird.

Vorzugsweise ist im Bereich des Ausgangs der Mischtrommel auch ein Materialsensor angeordnet, der der Steuereinrichtung ein Zufuhrsignal übermittelt, welches der Steuereinrichtung mitteilt, ob noch trockenes zementhaltiges Material am Ausgang der Mischtrommel vorhanden ist. Wenn das Signal negativ wird, stoppt die Steuereinrichtung sofort die Anlieferung, das heißt sie stoppt die Mischvorrichtung und die Wasserzufuhr zur Mischvorrichtung. Auf diese Weise wird sichergestellt, dass der Spritzbeton nur dann angemischt wird, wenn genug Trockenbetonmischung in der Mischtrommel vorhanden ist.

Die Fördereinrichtung ist vorzugsweise durch eine Austragswalze mit sich quer zur Walzenachse erstreckenden Förderstreben (Igelwalze) gebildet. Eine derartige Fördereinrichtung ist sehr gut in der Lage, ein Verstopfen des Ausgangs der Mischtrommel zu verhindern und eine kontinuierliche Materialzufuhr sicherzustellen. Vorzugsweise ist diese Fördereinrichtung durch die Steuereinrichtung steuerbar. Zu Beginn der Anlieferung schaltet somit die Steuereinrichtung die Fördereinrichtung ein und mit Ende der Anlieferung schaltet die Steuereinrichtung die Fördereinrichtung aus. Es kann selbstverständlich auch vorgesehen sein, dass die automatische Zuschaltung der Fördereinrichtung manuell abschaltbar ist.

Vorzugsweise ist auch die Mischvorrichtung durch die Steuereinrichtung steuerbar, so dass vorzugsweise die Mischvorrichtung zu Beginn der Anlieferung eingeschaltet und am Ende der Anlieferung abgeschaltet wird. Durch die Ein/Aus-Steuerung der Mischvorrichtung muss die Steuereinrichtung nur noch die Wassermenge an die durch die Mischvorrichtung geförderte Menge an trockenem zementhaltigen Material anpassen, was steuerungstechnisch einfach ist. Selbstverständlich kann es auch vorgesehen sein, dass die Geschwindigkeit der Mischvorrichtung steuerbar ist, in welchem Fall die Steuereinrichtung die Geschwindigkeit der Mischvorrichtung über einen entsprechenden Drehzahlsensor oder die Ansteuerung selbst (z.B. einen Frequenzwandler) erfasst und die zugeführte Wassermenge über die Ventil/Pumpenanordnung entsprechend ansteuert, um so einen gewünschten Wasser/Zement-Wert einzustellen.

Vorzugsweise ist im Auslassbereich der Mischtrommel eine Vibrationseinrichtung angeordnet, die vorzugsweise über die Steuereinrichtung ansteuerbar ist. Es kann zum Beispiel vorgesehen sein, dass die Vibrationseinrichtung oder Rütteleinrichtung nur periodisch eingeschaltet wird, um ein Nachrutschen des trockenen oder feuchten zementhaltigen Materials am Ausgang der Mischertrommel sicherzustellen. Zusammen mit der Fördervorrichtung, das heißt insbesondere mit der Austragswalze, wird somit eine kontinuierliche gleichbleibende Materialzufuhr an trockenem oder nassem zementhaltigen Material zur Mischvorrichtung sichergestellt.

Vorzugsweise ist die Wassermengenerfassungseinrichtung durch einen zwischen dem Wasserbehälter und dem Wasserzufuhranschluss der Mischvorrichtung angeordneten elektrischen Durchflussmengenmesser mit Signalausgang gebildet. Ein derartiger elektrischer Durchflussmengenmesser erlaubt auf einfache Weise die Erfassung der Wassermenge, welche der Mischvorrichtung zugeführt wird. Die Wassermengenerfassungseinrichtung kann im Fall einer durch eine Dosierpumpe gebildeten Ventil/Pumpenanordnung jedoch auch durch die Dosierpumpe selbst gebildet sein.

Die Erfindung betrifft weiterhin ein Verfahren zum Anliefern von Spritzbeton in Form einer Trockenbetonmischung, die vor Ort mit einer erforderlichen Wassermenge zum Erreichen eines gewünschten Wasser/Zement-Werts gemischt wird. Während der Anlieferung wird die abgegebene Menge an Trockenbetonmischung und Wasser von einer Steuereinrichtung erfasst und in einem zugeordneten Speicher abgelegt. Danach werden die abgelegten Daten auf ein externes Speichermedium übertragen, ausgedruckt oder über eine Schnittstelle an eine externe Datenerfassungseinrichtung übertragen. Auf diese Weise stellt das erfindungsgemäße Verfahren eine lückenlose Dokumentation der angelieferten Mengen an Trockenbetonmischung und Wasser dar. Vorzugsweise wird neben den angelieferten Mengen an Trockenbetonmischung und Wasser auch die Uhrzeit und das Datum der Anlieferung erfasst und mitgespeichert. Vorzugsweise wird auch der Ort der Anlieferung entweder manuell oder über ein GPS-System erfasst und mit den anderen Daten zur Anlieferung gespeichert. Auf diese Weise kann eine lückenlose Dokumentation über die angelieferten Materialmengen, den damit erzielten Wasser/Zement-Wert, das Datum als auch den Ort der Anlieferung erreicht werden. Vorzugsweise wird bei diesem Verfahren das Wasser über ein Ventil/Pumpenanordnung einer Mischvorrichtung zudosiert, wobei die Ventil/Pumpenanordnung durch die Steuereinrichtung entsprechend einem in die Steuereinrichtung eingegebenen oder voreingestellten Wasser/Zement-Wert angesteuert wird. Die Steuereinrichtung ist damit nicht nur für die Dokumentation der angelieferten Menge zuständig, sondern kann auch vorzugsweise für die automatische Einstellung der zugeführten Wassermenge verwendet werden, womit diese auch die Qualität, d.h. die Einhaltung eines gewünschten Wasser/Zement-Werts des Spritzbetons steuert. Erfindungsgemäß wird die Abgaberate an Trockenbetonmischung über die Signale einer Wägevorrichtung der Mischtrommel erfasst, um so die zuzumischende Wassermenge zu ermitteln, die vorzugsweise über eine Ventil/Pumpenanordnung eingestellt wird. Auf diese Weise kann die zugegebene Wassermenge genau auf die von der Wägevorrichtung ermittelte Abgaberate an Trockenbetonmischung angepasst werden. Der eingestellte Wasser/Zement-Wert ist damit sehr exakt einstellbar.

In jedem Fall wird die Mischvorrichtung und die Ventil/Pumpenanordnung während des Beginns der Anlieferung über einen begrenzten Zeitraum entsprechend voreingestellten Werten betätigt, weil die Abgaberate an Trockenbetonmischung von der Wägevorrichtung erst nach einem bestimmten Zeitraum verfügbar ist, zum Beispiel nach 10 s bis 1 min.

In dem Verfahren gemäß der Erfindung wird vorzugsweise ein Transportfahrzeug eingesetzt, wie es in den vorgenannten Abschnitten beschrieben wurde.

Die Wassermengenerfassungseinrichtung kann vorzugsweise ein elektrischer Durchflussmengenmesser sein, kann durch eine Zudosierpumpe der Ventil/Pumpenanordnung gebildet sein oder kann eine Wasserwägeeinrichtung umfassen, die die Gewichtsdifferenz des Wasserbehälters vor und nach der Anlieferung ermittelt. Die Wägevorrichtung der Mischtrommel ist vorzugsweise durch ein vorderes Wägeelement im Bereich der vorderen Drehwellenlagerung im Bereich des Rotationsantriebs der Mischtrommel gebildet, als auch durch zwei Wägeelemente im Bereich der Umfangslagerdung. Die Messsignale der drei Wägeelmente werden einfach addiert. Der Antrieb für die Mischvorrichtung, die Fördereinrichtung, die Ventil/Pumpenanordnung und die Vibrationseinrichtung sind vorzugsweise über die Steuereinrichtung steuerbar. Weiterhin enthält das Transportfahrzeug weiterhin Bordelektrik und Bordhydraulik zum Antrieb aller Komponenten.

Die Energieversorgung aller Komponenten ist vorzugsweise auf dem Transportfahrzeug angeordnet, womit das Transportfahrzeug von externen Energiequellen, z.B. einer Stromversorgung autark ist.

Speziell für den Tunnelbetrieb kann jedoch vorgesehen sein, dass die Energieversorgung aller für die Abgabe des Spritzbeton notwendigen Komponenten, nämlich Steuereinrichtung, Ventil/Pumpenanordnung, Mischvorrichtung, Fördereinrichtung, Vibrationseinrichtung, Mischtrommelantrieb über eine externe Energieversorgung mittels eines entsprechenden Anschlusses realisierbar ist, oder über eine eigene Akkumulatoreinheit am Transportfahrzeug.

Die Komponenten für die Abgabe des Spritzbetons können einfach oder mehrfach vorgesehen sein. Sie können auch miteinander integriert sein, wie z.B. die Ventil/Pumpenanordnung mit der Wassermengenerfassungseinrichtung.

Folgende Begriffe werden synonym verwendet: Durchflussmengenmesser, Wasseruhr, Wassermengenzähler.

Die oben beschriebenen Ausführungsbeispiele sind beliebig kombinierbar. Weiterbildungen, Vorteile und Anwendungsmöglichkeiten der Erfindung ergeben sich auch aus der nachfolgenden Beschreibung von Ausführungsbeispielen und aus den Figuren.

### Kurze Beschreibung der Zeichnungen

Die Erfindung wird nachfolgend in der Zeichnung anhand eines schematischen Beispiels beschrieben. In dieser zeigen:

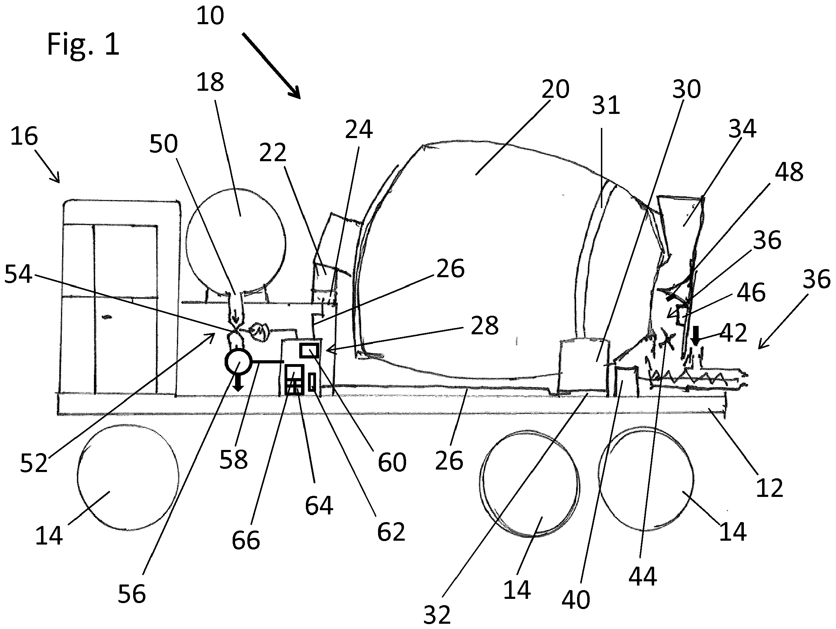

- Fig. 1: eine Seitenansicht eines erfindungsgemäßen Transportfahrzeugs,
- Fig. 2: ein Ablaufdiagramm zur Anlieferung eines Spritzbetongemischs mit einem gewünschten Wasser/Zement-Wert, und
- Fig. 3: ein Ablaufdiagramm zur Anlieferung eines Spritzbetons mit einem gewünschten Wasser/Zement-Wert, bei welchem die Einstellung des Wasser/ZementWertes automatisch geregelt wird.

### Wege zur Ausführung der Erfindung

Das Transportfahrzeug 10 enthält einen Rahmen 12, welcher auf Rädern 14 montiert ist. Der Rahmen 12 trägt eine Führerkabine 16 mit einem Antriebsmotor und allen üblichen Steuermitteln zur Bedienung des Transportfahrzeugs. Weiterhin trägt der Rahmen 12 einen Wasserbehälter 18 und eine Mischtrommel 20. Die Mischtrommel 20 ist führerhausseitig auf einem Drehwellenlager 22 gehalten, die auf einer vorderen Lastwägezelle 24 aufliegt. Die vordere Lastwägezelle ist über einen ersten Signalausgang 26 mit einer Steuereinheit 28 verbunden. Weiterhin liegt die Mischtrommel 20 in ihrem rückwärtigen Bereich auf zwei Rollenlagern 30 auf, die einen Umfangsbereich 31 der Mischtrommel abstützen. Die Rollenlager 30 liegen auf zugeordneten hinteren Lastwägezellen 32 auf, welche wiederum über einen ersten Signalausgang 26 mit der Steuereinrichtung 28 verbunden sind. Über die vordere Lastwägezelle 24 und die hinteren zwei Lastwägezellen 32 lässt sich somit das Gewicht der Mischtrommel 20 samt Inhalt genau bestimmen. Am hinteren Ausgang der Mischtrommel 20 ist ein nach oben ragender Einlass 34 angeordnet und ein sich nach unten erstreckender Auslassbereich 36. Am unteren Ende des Auslassbereichs 36 ist eine Mischvorrichtung 38 in Form eines Schneckenmischers angeordnet, welcher durch einen Mischerantrieb 40 angetrieben wird. Der Schneckenmischer 38 hat einen Wasserzufuhranschluss 42 für die Zugabe von Wasser aus dem Wasserbehälter 18. Im Auslassbereich 36 der Mischtrommel 20 ist weiterhin eine Fördereinrichtung in Form einer Austragswalze 44, eine Vibrationseinrichtung 46 und ein Materialsensor 48 angeordnet. Die Austragswalze 44 führt zu einem kontinuierlichen Materialaustrag aus der Mischtrommel 20 ohne Verstopfungen. Die Vibrationseinrichtung 48 kann periodisch oder nur bedarfsweise eingeschaltet werden, um den Materialabfluß aus der Mischtrommel zu unterstützen. Der Materialsensor 48 übermittelt der Steuereinrichtung 28 ein Signal, ob noch genug Trockenbetonmischung in der Mischtrommel 20 vorhanden ist.

Der Ausgang 50 des Wasserbehälters 18 ist mit einer Ventil/Pumpenanordnung 52 verbunden, welche beispielsweise ein motorisches Stellventil 54 und gegebenenfalls eine nicht dargestellte Förderpumpe aufweist. Das motorische Stellventil 54 ist mit der Steuereinrichtung 28 verbunden und durch diese angesteuert. In der Leitung zwischen dem Wasserbehälter 18 und dem Wasserzufuhranschluss 42 der Mischvorrichtung 38 ist weiterhin ein elektrischer Durchflussmengenmesser 56 angeordnet, dessen Ausgang mit dem Wasserzufuhranschluss 42 der Mischvorrichtung 38 verbunden ist. Der elektrische Durchflussmengenmesser liefert über einen ersten Signalausgang 58 ein Signal an die Steuereinrichtung 28 über die aktuell zugeführte Wassermenge. Die Steuereinrichtung 28 hat einen Speicher 60 für voreingegebene Wasser/Zement-Werte und zugeordnete Steuerdaten als auch zur Abspeicherung der im Rahmen einer Anlieferung abgegebenen Mengen an Trockenbetonmischung aus der Mischtrommel 20 und Wasser aus dem Wasserbehälter 18. Weiterhin hat die Steuereinrichtung 28 optional eine innere Uhr und optional ein GPS-System zur Erfassung des Ortes der Anlieferung. Weiterhin hat die Steuereinrichtung einen USB-Port 62 zur Datenübertragung der abgespeicherten Daten der angelieferten Materialmengen und Wassermengen als auch gegebenenfalls der zugeordneten Datums- und Ortsdaten über den USB-Port 62 entweder auf einen USB-Stick oder an eine externe Datenverarbeitungseinrichtung, zum Beispiel einen Laptop. Die Steuereinrichtung 28 enthält weiterhin eine Eingabetastatur 64 und ein Display 66 zur Eingabe und Anzeige von Daten oder Parametern. Optional enthält die Steuereinrichtung 28 auch einen Quittungsdrucker zum Ausdruck der angelieferten Materialmengen, gegebenenfalls des Datums und der Uhrzeit als auch des Ortes der Anlieferung.

Die Austragswelle 44 als auch die Vibrationseinrichtung 46 wie auch der Antrieb 40 der Mischvorrichtung 38 werden vorzugsweise über die Steuereinrichtung 28 angesteuert.

Die Anlieferung von Spritzbeton mit dem dargestellten Transportfahrzeug verläuft wie folgt:
Über die Eingabetastatur 64 der Steuereinrichtung 28 wird entweder ein gewünschter Wasser/Zement-Wert eingestellt oder ein voreingestellter Wasser/Zement-Wert ausgewählt. Der eingestellte oder ausgewählte Wasser/Zement-Wert kann in einem optionalen Display 66 angezeigt werden. Mit Start der Anlieferung startet die Steuereinrichtung 28 die Rotation der Mischtrommel 20 in Abgaberichtung und gleichzeitig wird die Austragswelle 44 im Auslassbereich 36 der Mischtrommel 20 eingeschaltet. Gleichzeitig oder mit geringem Versatz wird der Antrieb 40 der Mischvorrichtung 38 eingeschaltet und die Ventil/Pumpenanordnung 42 wird eingeschaltet, um der Mischvorrichtung 38 über den Wasserzufuhranschluss 42 eine definierte Wassermenge zuzuführen, welche dem eingegebenen oder voreingestellten Wasser/Zement-Wert entspricht. Hierfür wird die Ventil/Pumpenanordnung 52 motorisch entsprechend angesteuert, um die gewünschte Wassermenge einzustellen. In der Ventil/Pumpenanordnung 52 kann ein Durchflussmengenmesser integriert sein. Falls dies nicht der Fall ist, ist vor oder hinter der Ventil/Pumpenanordnung ein elektrischer Durchflussmengenmesser 56 angeordnet, der über den ersten Signalausgang 58 mit der Steuereinrichtung 28 verbunden ist. Auf diese Weise ist die Steuereinrichtung 28 in der Lage, die Wassermengenzugabe entsprechend dem Antrieb der Mischvorrichtung 38 einzustellen. Es ist so zum Beispiel möglich, dass die Mischvorrichtung 38 nur mit einer Geschwindigkeit betrieben wird, so dass die Förderleistung der Mischvorrichtung 38 hinsichtlich der Trockenbetonmischungzufuhr definiert ist. In diesem Fall muss die Steuereinrichtung 28 zur Erzielung des gewünschten Wasser/Zement-Wertes nur die entsprechende Menge an Wasser über den Wasserzufuhranschluss 42 der Mischvorrichtung 38 zuführen. Dies macht die Steuereinrichtung durch die entsprechende Ansteuerung der Ventil/Pumpenanordnung 52. Es ist prinzipiell auch möglich, den Antrieb 40 der Mischvorrichtung mit unterschiedlicher Geschwindigkeit zu betreiben, in welchem Fall der Durchsatz der Mischvorrichtung entsprechend der Drehzahl des Antriebs 40 variiert. In diesem Fall erfasst die Steuereinrichtung 28 die Drehzahl des Antriebs 40 der Mischvorrichtung 38 und stellt die zugegebene Wassermenge über die Ventil/Pumpenanordnung 52 entsprechend ein.

Die Ventil/Pumpenanordnung kann entweder eine elektrische Pumpe mit einstellbarer Förderkapazität sein, in welchem Fall die Wassermengenzählung in der Pumpe erfolgen kann. Andernfalls kann die Ventil/Pumpenanordnung durch eine Parallelschaltung von mehreren Ventilen mit unterschiedlichem Wasserdurchlass gebildet sein oder durch ein stellbares Ventil, dessen Durchlassmenge einstellbar ist. Falls der Wasserbehälter 18 deutlich oberhalb der Mischvorrichtung 38 liegt, ist nicht einmal eine Pumpe für die Wasserzufuhr erforderlich. Wenn ein reproduzierbares Ergebnis gewünscht wird, kann jedoch das Vorsehen einer Pumpe separat zu einer reinen Ventilanordnung angezeigt sein.

Die Anmischung des Spritzbetons in der Mischvorrichtung 38 erfolgt nach dem bislang beschriebenen Verfahren allein aufgrund der angenommenen Durchsatzmenge der Mischvorrichtung 38, wie sie im Speicher 60 der Speichereinrichtung 28 hinterlegt ist. Vorzugsweise können jedoch die Messsignale der vorderen und hinteren Lastwägezellen 24, 32 verwendet werden, um die Abgaberate an Trockenbetonmischung zu bestimmen. In diesem Fall wird die Bestimmung des Wasser/Zement-Wertes wesentlich genauer, weil in diesem Fall nicht von einem angenommenen Durchsatz der Mischvorrichtung 38 ausgegangen wird, sondern die tatsächliche Abgaberate an Trockenbetonmischung über die Lastwägezellen 24, 32 exakt ermittelt wird. Somit kann die zugegebene Wassermenge exakt auf die über die Signale der Lastwägezellen 24, 32 ermittelte Abgaberate an Trockenbetonmischung angepasst werden. Mit Beendigung der Anlieferung, welche zum Beispiel durch eine Stopptaste an der Eingabetastatur 64 der Steuereinrichtung erfolgt, werden alle Komponenten gestoppt. Zudem wird die abgegebene Menge an Trockenbetonmischung und Wasser und evtl. Additiven (falls eine Additivbehälter und eine Zudosierungseinrichtung vorgesehen ist) in dem Speicher 60 der Steuereinrichtung 28 abgelegt. In diesem Zusammenhang ist anzumerken, dass der Speicher 60 der Steuereinrichtung 28 vorzugsweise nicht flüchtig ist, das heißt somit nach Ausschalten der Steuereinrichtung erhalten bleibt. Der Speicher kann so zum Beispiel als Flash-Speicher ausgebildet sein. Die gespeicherten Abgabemengen der Anlieferung können nun über den USB-Port 62 auf einen USB-Stick zusammen mit der Uhrzeit und dem Ort der Anlieferung abgespeichert werden und stehen dort der Baustellenleitung zur Verfügung. Andernfalls ist es möglich, über den USB-Port 62 die gespeicherten Daten auf eine Datenverarbeitungseinrichtung der Baustelle, zum Beispiel einen Laptop, zu überspielen. In jedem Fall stehen der Baustellenleitung sofort exakte Daten über die angelieferten Materialmengen, die exakt zugeführten Wasser/Zement-Werte der Spritzbetonmischung als auch über Zeit und Ort der Anlieferung zur Verfügung. Auf diese Weise ist eine wirkungsvolle Qualitätskontrolle der Spritzbetonanlieferung möglich.

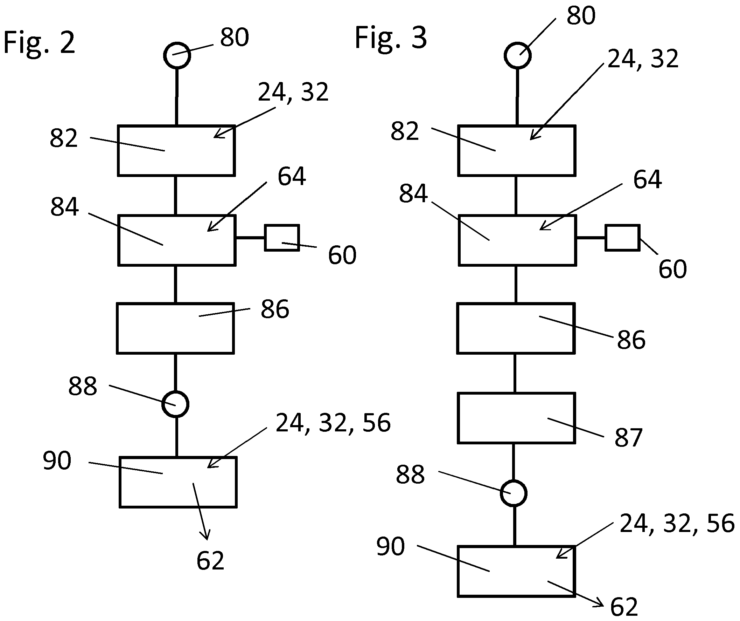

Fig. 2 und 3 beschreiben zwei unterschiedliche Verfahren zur Anlieferung von Spritzbeton an eine Baustelle. Die Anlieferung beginnt im Schritt 80 mit Betätigung eines Startknopfes an der Eingabetastatur 64 der Steuereinrichtung 28. Mit Betätigung des Startknopfes 80 erfasst die Steuereinrichtung 28 im Schritt 82 die Signale der Lastwägezellen 24 und 32, um so den aktuellen Stand an Trockenbetonmischung in der Mischtrommel 20 zu Beginn der Spritzbetonabgabe zu erhalten. Im Schritt 84 erfasst die Steuereinrichtung 28 einen über die Eingabetastatur 64 eingegebenen oder voreingestellten Wasser/Zement-Wert. Statt der manuellen Eingabe des Wasser/Zement-Wertes kann auch über die Eingabetastatur 64 bzw. einen Eingabeschalter ein voreingestellter Wasser/Zement-Wert ausgewählt werden. Die Steuereinrichtung 28 holt sich in diesem Schritt von dem Speicher 60 die notwendigen Betriebsparameter zur Anlieferung der gewünschten Spritzbetonmischung. Hierzu gehören die Durchsatzrate an Trockenbetonmischung durch den Betrieb der Mischvorrichtung 38 und der zugeordnete Wassermengenbedarf, um den eingegebenen bzw. ausgewählten Wasser/Zement-Wert zu erzielen.

Im Schritt 86 wird die Mischtrommel 20 in Rotation in Abgaberichtung versetzt. Gleichzeitig werden die Austragswalze 44 und der Antrieb 40 der Mischvorrichtung 38 eingeschaltet. Über den Materialsensor 48 wird laufend kontrolliert, ob genug Material in der Mischtrommel 20 ist. Weiterhin wird die Ventil/Pumpenanordnung 52 eingeschaltet, so dass der Mischvorrichtung 38 über den Wasserztufuhranschluss 42 eine Wassermenge zugegeben wird, welche der gespeicherten Zufuhrkennlinie der Mischvorrichtung 38 an Trockenbeton entspricht. In Fig. 2 wird die zugeführte Wassermenge somit an die vorgespeicherte Durchsatzleistung der Mischvorrichtung 38 an Trockenbetonmischung entsprechend der im Speicher 60 abgespeicherten Kennlinie angepasst. Mit Betätigung der Stopptaste im Schritt 88 wird der Anlieferungsvorgang abgebrochen. Der Antrieb 40 der Mischvorrichtung, die Rotation der Mischtrommel 20 als auch die Wasserzufuhr werden gestoppt. Zudem werden in Schritt 90 die zugeführten Mengen an Trockenbetonmischung, Wasser, der Ort der Anlieferung als auch die Zeit der Anlieferung im Speicher 60 der Speichereinrichtung 28 abgespeichert. Diese abgespeicherten Daten lassen sich dann über den USB-Port 62 entweder auf einen USB-Stick schreiben oder über eine Datenverarbeitungseinrichtung an der Baustelle abgreifen. In Fig. 3 wird der Wasser/Zement-Wert nur am Anfang auf eine vorgespeicherte Förderkennlinie der Mischvorrichtung 38 eingestellt. Nach einer gewissen Zeit, zum Beispiel 10 s bis 1 min, insbesondere 10 s bis 30 s, wird aus denen von den Lastwägezellen 24, 32 erhaltenen Signalen die Abgaberate des der Mischvorrichtung 38 zugeführten Trockenbetons errechnet und die zugeführte Wassermenge wird über entsprechende Ansteuerung der Ventil/Pumpenanordnung 52 exakt auf die ermittelte Abgaberate eingestellt. Dies erfolgt in Schritt 87. Auf diese Weise werden für die Einstellung des Wasser/Zement-Wertes keine eingespeicherten Kennlinien, sondern tatsächliche aktuelle Abgabemengen an Trockenbetonmischung herangezogen, so dass sich ein gewünschter Wasser/Zement-Wert sehr viel genauer einstellen lässt.

Es bleibt zu erwähnen, dass die im Rahmen der Anlieferung abgegebenen Materialmengen in Schritt 90 errechnet werden über den elektrischen Durchflussmengenmesser 56 als auch über die Gewichtsdifferenz der Signale der Lastwägeeinrichtung 24, 32 zu Beginn und zum Ende der Anlieferung.

Statt der Verwendung eines elektrischen Durchflussmengenmessers 56 kann auch eine entsprechende elektrische Pumpe mit genauer Durchsatzleistung verwendet werden oder eine Wiegevorrichtung für den Wasserbehälter 18, wobei die zugeführte Wassermenge dann auch über Differenzwägung zu Beginn und zu Ende der Anlieferung erfolgt.

Die oben beschriebenen Ausführungsbeispiele sind nicht beschränkend, sondern können in beliebiger Weise variiert werden innerhalb des Schutzbereichs der beiliegenden Ansprüche.

### Bezugszeichenliste

- 10: Transportfahrzeug
- 12: Rahmen
- 14: Räder
- 16: Führerkabine
- 18: Wasserbehälter
- 20: Mischtrommel
- 22: Drehwellenlager
- 24: vordere Lastwägezelle
- 26: erster Signalausgang
- 28: Steuereinrichtung
- 30: Rollenlager
- 31: Umfangslagerbereich der Mischtrommel
- 32: hintere Lastwägezelle
- 34: Einlass
- 36: Auslassbereich
- 38: Mischvorrichtung
- 40: Antrieb (der Mischvorrichtung)
- 42: Wasserzufuhranschluss
- 44: Zufuhrvorrichtung (Austragswalze)
- 46: Vibrationseinrichtung (Rüttler)
- 48: Materialsensor
- 50: Ausgang des Wasserbehälters
- 52: Ventil/Pumpenanordnung
- 54: motorisches Stellventil
- 56: Durchflussmengenmesser
- 58: zweiter Signalausgang
- 60: Speicher
- 62: USB-Port
- 64: Eingabetastatur
- 66: Display

## Patentansprüche

1. Transportfahrzeug (10)
- mit einer drehbar gelagerten Mischtrommel (20) für trockenes zementhaltiges Material,
- mit einem Wasserbehälter (18),
- mit einer dem Ausgang der Mischtrommel (20) nachgeordneten Mischvorrichtung (38) zum Mischen des Materials aus der Mischtrommel (20) mit Wasser aus dem Wasserbehälter, welche Mischvorrichtung (38) über einen Wasserzufuhranschluss (42) mit dem Wasserbehälter (18) verbunden ist,
- mit einer Wassermengenerfassungseinrichtung (56) zur Erfassung der vom Wasserbehälter zur Mischvorrichtung (38) zugeführten Wassermenge, welche Wassermengenerfassungseinrichtung einen mit dem Messeingang einer Steuereinrichtung (28) verbunden ersten Signalausgang hat, welche Steuereinrichtung auf dem Transportfahrzeug angeordnet ist und einen Speicher (60) für die Erfassung der Werte der Wassermengenerfassungseinrichtung (56) und der Wägevorrichtung (24, 32) aufweist, und welche Steuereinrichtung (28) einen Ausgang oder eine Schnittstelle (62) zur Übertragung der erfassten und/oder gespeicherten Daten aufweist,
**dadurch gekennzeichnet, dass** das Transportfahrzeug eine Wägevorrichtung für das Gewicht der Mischtrommel (20) aufweist, welche Wägevorrichtung einen mit der Steuereinrichtung verbundenen zweiten Signalausgang hat.

2. Transportfahrzeug (10) nach Anspruch 1, **dadurch gekennzeichnet, dass** es eine Ventil/Pumpenanordnung (52) aufweist, die eine Steuerung des Wasserdurchflusses zum Wasserzufuhranschluss (42) der Mischvorrichtung (38) erlaubt, welche Ventil/Pumpenanordnung durch die Steuereinrichtung (28) insbesondere in Abhängigkeit von dem Signal der Wägevorrichtung (24, 32) steuerbar ist.

3. Transportfahrzeug (10) nach Anspruch 2, **dadurch gekennzeichnet, dass** die Steuereinrichtung (28) über eine Eingabevorrichtung (64) zur Eingabe eines gewünschten Wasser/Zement-Wertes aufweist, und dass die Ventil/Pumpenanordnung (52) in Abhängigkeit von dem eingegebenen Wert steuerbar ist.

4. Transportfahrzeug (10) nach einem der Ansprüche 2 bis 3, **dadurch gekennzeichnet, dass** der Speicher (60) einen Speicherabschnitt für voreingestellte Wasser/Zement-Werte und zugeordnete Steuersignale für die Ventil/Pumpenanordnung (52) und gegebenenfalls für die Mischvorrichtung (38) aufweist, und die Steuereinrichtung (28) dazu konzipiert ist, die Ventil/Pumpenanordnung (52) und gegebenenfalls die Mischvorrichtung (38) zumindest während des Beginns einer Anlieferung entsprechend den voreingestellten Werten zu steuern.

5. Transportfahrzeug (10) nach einem der vorhergehenden Ansprüche, **dadurch gekennzeichnet, dass** die Steuereinrichtung (28) eine interne Uhr aufweist, und dass die Steuereinrichtung dazu konzipiert ist, die Signale der Wägevorrichtung (24, 32) und der Wassermengenerfassungseinrichtung (56) mit zugeordneten Zeitdaten der internen Uhr abzuspeichern.

6. Transportfahrzeug (10) nach einem der vorhergehenden Ansprüche, **dadurch gekennzeichnet, dass** es eine im Ausgangsbereich der Mischtrommel (20) angeordnete Fördereinrichtung (44) aufweist.

7. Transportfahrzeug (10) nach Anspruch 6, **dadurch gekennzeichnet, dass** die Fördereinrichtung (44) durch die Steuereinrichtung (28) steuerbar ist.

8. Transportfahrzeug (10) nach einem der vorhergehenden Ansprüche, **dadurch gekennzeichnet, dass** die Mischvorrichtung (38) durch die Steuereinrichtung (28) steuerbar ist.

9. Transportfahrzeug (10) nach einem der vorhergehenden Ansprüche, **dadurch gekennzeichnet, dass** im Auslassbereich der Mischtrommel (20) eine Vibrationseinrichtung (46) angeordnet ist, die vorzugsweise durch die Steuereinrichtung (28) steuerbar ist.

10. Transportfahrzeug (10) nach einem der vorhergehenden Ansprüche, **dadurch gekennzeichnet, dass** die Wassermengenerfassungseinrichtung (56) durch einen zwischen dem Wasserbehälter (18) und dem Wasserzufuhranschluss (42) angeordneten elektrischen Wasserdurchflussmesser mit Signalausgang gebildet ist.

11. Transportfahrzeug (10) nach einem der vorhergehenden Ansprüche, **dadurch gekennzeichnet, dass** die Förderleistung der Mischvorrichtung (38) durch die Steuereinrichtung (28) steuerbar ist.

12. Verfahren zum Anliefern von Spritzbeton in Form einer Trockenbetonmischung, die vor Ort mit einer erforderlichen Wassermenge zum Erreichen eines gewünschten Wasser/Zement-Wertes gemischt wird mittels eines Transportfahrzeugs (10), welches eine Mischtrommel (20) zur Aufnahme der Trockenbetonmischung aufweist, wobei die während der Anlieferung abgegebene Menge an Trockenbetonmischung und Wasser von einer Steuereinrichtung (28) erfasst und in einem zugeordneten Speicher (60) abgelegt wird, **dadurch gekennzeichnet, dass** danach die abgelegten Daten auf ein externes Speichermedium übertragen, ausgedrückt oder über eine Schnittstelle (62) an eine externe Datenerfassungseinrichtung übertragen werden, und dass die abgegebene Menge an Trockenbetonmischung über die Signale einer Wägevorrichtung (24, 32) der Mischtrommel (20) erfasst wird, um die zuzumischende Wassermenge zu ermitteln.

13. Verfahren nach Anspruch 12, **dadurch gekennzeichnet, dass** das Wasser über eine Ventil/Pumpenanordnung (52) einer Mischvorrichtung (38) zudosiert und die Ventil/Pumpenanordnung durch die Steuereinrichtung (28) entsprechend einem in die Steuereinrichtung eingegebenen oder voreingestellten Wasser/Zement-Wert angesteuert wird,

14. Verfahren nach Anspruch 13, **dadurch gekennzeichnet, dass** die Mischvorrichtung (38) und die Ventil/Pumpenanordnung (52) während des Beginns der Anlieferung über einen begrenzten Zeitraum entsprechend voreingestellten Werten betätigt wird.

15. Verfahren nach einem der Ansprüche 13 bis 14, bei welchem die Mischvorrichtung (38) und die Ventil/Pumpenanordnung (52) während des Beginns der Anlieferung über einen begrenzten Zeitraum entsprechend voreingestellten Werten betätigt wird.

## Claims

1. Transportation vehicle (10)
- with a pivoted mixing drum (20) for dry cement-containing material,
- with a water container (18),
- with a mixing device (38) subordinate to the outlet of the mixing drum (20) to mix the material from the mixing drum (20) with water from the water container, which mixing device (38) is connected to the water container (18) via a water infeed connection (42),
- with a water quantity measuring device (56) to measure the quantity of water led from the water container to the mixing device (38), which water quantity measuring device has a first signal outlet connected to the measurement inlet of a control device (28), which control device is located on the transportation vehicle and shows a buffer (60) for gathering the levels of the water quantity measuring device (56) and of the weighing device (24, 32) and which control device (28) shows an outlet or an interface (62) for transferring the gathered and/or saved data,
**characterised in that** the transportation vehicle shows a weighing device for the weight of the mixing drum (20), which weighing device has a second signal outlet connected to the control device.

2. Transportation vehicle (10) of claim 1, **characterised in that** it shows a valve/pump array (52) that allows a control of the water flow to the water infeed connection (42) of the mixing device (38), which valve/pump array is controllable by the control device (28), particularly depending on the signal of the weighing device (24, 32).

3. Transportation vehicle (10) of claim 2, **characterised in that** the control device (28) shows an entry device (64) for entering a desired water/cement level and that the valve/pump array (52) is controllable depending on the entered level.

4. Transportation vehicle (10) of one of the claims 2 to 3, **characterised in that** the buffer (60) shows a buffer section for pre-set water/cement levels and allocated control signals for the valve/pump array (52) and, if applicable, for the mixing device (38), and the control device (28) is designed to control the valve/pump array (52) and, if applicable, the mixing device (38) at least during the beginning of a delivery in accordance with the pre-set levels.

5. Transportation vehicle (10) of one of the previous claims **characterised in that** the control device (28) shows an internal clock and **in that** the control device is designed to save the signals of the weighing device (24, 32) and the water quantity measuring device (56) with the allocated time data of the internal clock.

6. Transportation vehicle (10) of one of the previous claims **characterised in that** it shows a conveying device (44) located in the exit area of the mixing drum (20).

7. Transportation vehicle (10) to claim 6 **characterised in that** the conveying device (44) is controllable by the control device (28).

8. Transportation vehicle (10) of one of the previous claims **characterised in that** the mixing device (38) is controllable by the control device (28).

9. Transportation vehicle (10) of one of the previous claims **characterised in that** a vibration device (46) is located in the outlet area of the mixing drum (20) which is preferably controllable by the control device (28).

10. Transportation vehicle (10) of one of the previous claims **characterised in that** the water quantity measuring device (56) is formed by an electric water flow meter with signal outlet located between the water container (18) and the water infeed connection (42).

11. Transportation vehicle (10) of one of the previous claims **characterised in that** the conveying performance of the mixing device (38) is controllable by the control device (28).

12. Procedure to deliver shotcrete in the shape of a dry concrete mixture that is mixed on site with a required water quantity to achieve the desired water/cement level by means of a transportation vehicle (10), which shows a mixing drum (20) to hold the dry concrete mixture, wherein the amount of dry concrete mixture and water put in during the delivery is collected and deposited in an allocated buffer (60) by a control device (28) **characterised in that** the deposited data are subsequently transferred to an external saving device, expressed or transferred to an external data processing device via an interface (62) and that the amount of dry concrete mixture and water put in is gathered via the signals of a weighing device (24, 32) of the mixing drum (20) to determine the water quantity that is to be added to the mixture.

13. Procedure of claim 12 **characterised in that** the water is added via a valve/pump array (52) to a mixing device (38) and that the valve/pump array is actuated by the control device (28) corresponding to a water/cement level that is entered into the control device or that is pre-set,

14. Procedure of claim 13 **characterised in that** the mixing device (38) and the valve/pump array (52) is operated during the beginning of the delivery over a limited period of time corresponding to pre-set levels.

15. Procedure of one of the claims 13 to 14 wherein the mixing device (38) and the valve/pump array (52) is operated during the beginning of the delivery over a limited period of time corresponding to pre-set levels.

## Revendications

1. Véhicule de transport (10), comportant :
- un tambour mélangeur (20) monté rotatif destiné à du matériau sec contenant du ciment,
- un réservoir d'eau (18),
- un dispositif mélangeur (38) disposé en aval de la sortie du tambour mélangeur (20), pour mélanger le matériau venant du tambour mélangeur (20) avec de l'eau venant du réservoir d'eau, ledit dispositif mélangeur (38) étant relié au réservoir d'eau (18) par le biais d'un raccordement d'alimentation en eau (42),
- un moyen de détection de quantité d'eau (56) destiné à détecter la quantité d'eau alimentée du réservoir d'eau au dispositif mélangeur (38), ledit moyen de détection de quantité d'eau ayant une première sortie de signal reliée à l'entrée de mesure d'un moyen de commande (28), ledit moyen de commande étant disposé sur le véhicule de transport et présentant une mémoire (60) destinée à acquérir les valeurs du moyen de détection de quantité d'eau (56) et du dispositif de pesage (24, 32), et ledit moyen de commande (28) présentant une sortie ou une interface (62) destinée à la transmission des données acquises et/ou enregistrées,
**caractérisé en ce que** le véhicule de transport présente un dispositif de pesage pour le poids du tambour mélangeur (20), ledit dispositif de pesage ayant une seconde sortie de signal reliée au moyen de commande.

2. Véhicule de transport (10) selon la revendication 1, **caractérisé en ce qu'**il présente un ensemble vanne/pompe (52), qui permet une commande de l'écoulement d'eau vers le raccordement d'alimentation en eau (42) du dispositif mélangeur (38), ledit ensemble vanne/pompe pouvant être commandé par le moyen de commande (28), en particulier en fonction du signal du dispositif de pesage (24, 32).

3. Véhicule de transport (10) selon la revendication 2, **caractérisé en ce que** le moyen de commande (28) présente un dispositif de saisie (64) destiné à la saisie d'une valeur souhaitée d'eau et de ciment, et **en ce que** l'ensemble vanne/pompe (52) peut être commandé en fonction de la valeur saisie.

4. Véhicule de transport (10) selon l'une des revendications 2 et 3, **caractérisé en ce que** la mémoire (60) présente une section de mémoire pour des valeurs d'eau et de ciment préréglées et des signaux de commande associés pour l'ensemble vanne/pompe (52) et le cas échéant pour le dispositif mélangeur (38), et le moyen de commande (28) est conçu pour commander l'ensemble vanne/pompe (52) et le cas échéant le dispositif mélangeur (38) au moins pendant le début d'une livraison en fonction des valeurs préréglées.

5. Véhicule de transport (10) selon l'une des revendications précédentes, **caractérisé en ce que** le moyen de commande (28) présente une horloge interne, et **en ce que** le moyen de commande est conçu pour enregistrer les signaux du dispositif de pesage (24, 32) et du moyen de détection de quantité d'eau (56) avec des données temporelles associées de l'horloge interne.

6. Véhicule de transport (10) selon l'une des revendications précédentes, **caractérisé en ce qu'**il présente un moyen de convoyage (44) disposé dans la zone de sortie du tambour mélangeur (20).

7. Véhicule de transport (10) selon la revendication 6, **caractérisé en ce que** le moyen de convoyage (44) peut être commandé par le moyen de commande (28).

8. Véhicule de transport (10) selon l'une des revendications précédentes, **caractérisé en ce que** le dispositif mélangeur (38) peut être commandé par le moyen de commande (28).

9. Véhicule de transport (10) selon l'une des revendications précédentes, **caractérisé en ce qu'**un moyen vibrant (46), qui peut être de préférence commandé par le moyen de commande (28), est disposé dans la zone de sortie du tambour mélangeur (20).

10. Véhicule de transport (10) selon l'une des revendications précédentes, **caractérisé en ce que** le moyen de détection de quantité d'eau (56) est formé par un débitmètre à eau électrique doté d'une sortie de signal, disposé entre le réservoir d'eau (18) et de raccordement d'alimentation en eau (42).

11. Véhicule de transport (10) selon l'une des revendications précédentes, **caractérisé en ce que** le débit du dispositif mélangeur (38) peut être commandé par le moyen de commande (28).

12. Procédé de livraison de béton projeté sous la forme d'un mélange de béton sec, qui est mélangé sur place avec une quantité d'eau nécessaire pour obtenir une valeur souhaitée d'eau et de ciment, au moyen d'un véhicule de transport (10), qui présente un tambour mélangeur (20) pour recevoir le mélange de béton sec, la quantité de mélange de béton sec et d'eau débitée pendant la livraison étant détectée par un moyen de commande (28) et stockée dans une mémoire (60) associée, **caractérisé en ce que** les données stockées sont ensuite transmises à un support de mémoire externe, imprimées ou transmises à un moyen d'acquisition de données externe par le biais d'une interface (62), et **en ce que** la quantité débitée de mélange de béton sec est détectée par le biais des signaux d'un dispositif de pesage (24, 32) du tambour mélangeur (20), afin de déterminer la quantité d'eau à ajouter au mélange.

13. Procédé selon la revendication 12, **caractérisé en ce que** l'eau est ajoutée de manière dosée à un dispositif mélangeur (38) par le biais d'un ensemble vanne/pompe (52) et l'ensemble vanne/pompe est commandé par le moyen de commande (28) en fonction d'une valeur d'eau et de ciment préréglée ou saisie dans le moyen de commande.

14. Procédé selon la revendication 13, **caractérisé en ce que** le dispositif mélangeur (38) et l'ensemble vanne/pompe (52) sont actionnés pendant le début de la livraison sur une période limitée en fonction de valeurs préréglées.

15. Procédé selon l'une des revendications 13 et 14, dans lequel le dispositif mélangeur (38) et l'ensemble vanne/pompe (52) sont actionnés pendant le début de la livraison sur une période limitée en fonction de valeurs préréglées.
